# EUROPÄISCHE PATENTSCHRIFT

(11) **EP 1 101 808 B1**
(45) Veröffentlichungstag und Bekanntmachung des Hinweises auf die Patenterteilung: **29.10.2003**
(21) Anmeldenummer: 00124688.3
(22) Anmeldetag: 11.11.2000
(51) Int. Cl.: C09J 7/02, C08J 5/18, B32B 3/30, B32B 27/08

(54) **Klebeband**
Adhesive tape
Ruban adhésif

(30) Priorität: 19.11.1999 DE 19955610
(43) Veröffentlichungstag der Anmeldung: 23.05.2001
(73) Patentinhaber: Tesa AG, 20253 Hamburg (DE)
(72) Erfinder: Müssig, Bernhard, Dr., 21218 Seevetal (DE); Schmeer, Gert, 83346 Bergen-Bernhaupten (DE)

(56) Entgegenhaltungen:
- US-A- 5 435 963

## Beschreibung

Gegenstand der Erfindung sind eine in Längsrichtung gereckte Folie mit planparallelen Außenseiten und mindestens zwei coextrudierten Schichten unterschiedlicher Zusammensetzung, deren Grenzfläche nicht eben ist, sondern im Querschnitt einen nicht geraden Grenzverlauf aufweist, der sich in Längsrichtung laminar fortsetzt sowie ein Verfahren durch Coextrusion und Reckung zu seiner Herstellung und ein daraus hergestelltes Klebeband.

Die besondere innere Struktur der Folie beruht darauf, daß die. Dicke einer Schicht in Querrichtung periodisch oder unregelmäßig variiert und die zweite Schicht die Dickenschwankungen derart kompensierte, daß die Gesamtdicke im wesentlichen konstant ist.

Das wesentliche technische Kennzeichen der Erfindung ist die Kombination von Seiteneinreißfestigkeit (Weiterreißkraft und Restfestigkeit) und Längsfestigkeit (Zugfestigkeit und Spannung bei 10 % Dehnung) in Längsrichtung.

### Stand der Technik

Folien mit hoher Längsfestigkeit erreicht man üblicherweise durch Verstrecken von schmelzextrudierten teilkristallinen Thermoplasten wie Polypropylen oder Polyester. Dabei handelt es sich überwiegen um eine biaxiale Verstreckung, im Ausnahmefall sind die Folien zur weiteren Erhöhung von Längsfestigkeit) nur in Längsrichtung orientiert. Die durch die Verstreckung verbesserte Festigkeit und verringerte Dehnbarkeit bei Zugbeanspruchung bewirkt jedoch gleichzeitig eine drastisch verringerte Weiterreißkraft und Restfestigkeit. Dies führt z. B. im Fall von rauhen Kanten von Folie bzw. Klebeband (bedingt durch stumpfe Messer beim Schneiden oder späterer unbeabsichtigter Verletzung der Schnittkante) zum Abreißen und Zugbelastung. Für einfache Anwendungen reicht die Verwendung Hart-PVC-Folien (EPVC und schlagzähmodifiziertes SPVC) aus, die einen Kompromiß aus Seiteneinreißfestigkeit und Längsfestigkeit bieten. Die Verwendung von Geweben bieten einen Kompromiß auf höherem Niveau, allerdings mit dem Nachteil eines extrem höheren Preises und weitere Arbeitsschritten wie Streichbeschichtung um die Oberfläche zu schließen.

Die DOS 36 40 861 beschreibt einen Aufreißstreifen mit verringerter Abreißneigung durch Verwendung einer in Längsrichtung verstreckten Folie, welche durch Coextrusion von Rohstoffen unterschiedlicher Zähigkeit hergestellt ist. Die zähe und weiche Coextrusionsschicht verringert die Bildung von Mikrorissen beim Schneiden des Produktes und verbessert dadurch die Seiteneinreißfestigkeit. Sie vermeidet jedoch nicht das Abreißen an nachträglich verletzter Kanten, dies erfordert eine drastische Verbesserung des Weiterreißwiderstandes, welche nur die erfindungsgemäße coextrudierte Folie mit einer inneren Struktur aufweist. Die für o. a. Erfindung angegeben Rohstoffe zur Erhöhung der Zähigkeit führen jedoch zu deutlich verringerter Längsfestigkeit, insbesondere die Rohstoffe zähen Coextrusionsschicht. Die beschriebenen Folien weisen schon eine reduzierte Kraft pro 4 mm Breite bei 10 %. Dehnung und bei Bruch auf, betrachtet man die querschnittsbezogenen Werte Zugfestigkeit, Reißfestigkeit und Spannung bei 10 % Dehnung so wird der Abfall der Performance noch deutlicher.

Bei hoher Belastung müssen Folien bzw. Klebebänder mit Filamenten oder Netzen aus Filamenten aus Glas oder Kunststoff verstärkt werden. Die Herstellung solcher Filamentklebebänder ist anlagenseitig sehr aufwendig und damit teuer und störanfällig. Neben der Basisfolie werden zusätzlich noch die Filamente und Laminierkleber (bzw. zusätzliche Haftkleberbeschichtung) benötigt, welches die Produkte weiter verteuert und mehr Rohstoffressourcen bindet. Weitere Nachteile solcher Filamentklebebänder sind die geringe Knickbruchbeständigkeit, die unsauberen Schneidkanten und die fehlende Durchschweißbarkeit und Recyclingfähigkeit. Die Herstellung wird z. B. in der US 4 454 192 beschrieben.

Die US 4 536 362 beschreibt ein Verfahren zur Herstellung von Stretchfolien zur Paletteneinwicklung. Die in Längsrichtung verlaufenden Rippen sollen Verunreinigungen des Polymers aufnehmen, um die Bildung von Löchern und andere Fehlern in der dünnen Folie zu vermeiden. Die Folien sind unverstreckt und bieten keinen Verstärkungseffekt.

Die US 4 592 938 beschreibt ein Verfahren zur Herstellung von Folien für Kunststoffsäcke, Griffe und Stretchverpackung. Ein Verstärkungseffekt wird durch in Längsrichtung verlaufende coextrudierte fadenartige Streifen im Inneren der Folie erzielt. Das Verfahren ist auf Polypropylen nicht anwendbar, da der üblich Gelanteil zwangsläufig die Fadenkanäle der Düse verstopft. Die Folien sind unverstreckt und weisen daher nur geringe Längsfestigkeit auf.

Die EP 0 411 830, EP 0 343 896, US 5 145 544 und US 5 173 141 beschreiben ein Klebeband aus monoaxial verstreckter Folie, welche eine Rippenstruktur zur Verstärkung aufweist, wobei die Rippen zum Teil aus der Oberfläche herausragen und zum Teil in die Folienoberfläche eingebettet sind und zwischen Folie und Rippen Kerbfugen ausgebildet sind. Die Erfindung erreicht hohe Seiteneinreißfestigkeit, die Zugfestigkeit und Dehnbarkeit hingegen sind noch verbesserungswürdig. Der wesentliche Mangel dieser Erfindung besteht jedoch darin, daß es nicht im Produktionsmaßstab herstellbar ist. Die Ursache dafür ist die schlechte Verstreckbarkeit in üblicher Breite. Bei Herstellung einer Primärfolie mit strukturierter (gerippter) Oberfläche in 25 cm Breite entsteht durch das Verstrecken beidseitig ein Einsprung, der unter Berücksichtigung des technisch notwendigen Kantenbeschnitts eine maximale Nutzbreite von etwa 15 cm ergibt, welche kommerziell nicht mehr für das Beschichten mit Klebemasse sinnvoll ist. Die Folie weist trotz des schon wirtschaftlich nicht mehr vertretbaren hohen Kantenbeschnitt immer noch eine extrem schlechte Planlage auf, so daß die Beschichtbarkeit mit Haftkleber nicht mehr gewährleistet ist. Bei größeren Breiten verschlechtert sich zudem die Planlage auch noch durch ungleichmäßige und unzureichende Haftung (bedingt durch die nicht planparallelen Außenseiten der Folie) auf den Reckwalzen im nachfolgenden Verstreckungsprozeß. Beim Längsverstrecken der Primärfolie springt die Folie im Randbereich ein, wobei die Rippenstrucktur i. W. erhalten bleibt. Bei einer Herstellung in produktionsüblicher Breite wird die Folie im mittleren Bereich auf den Reckwalzen in Querrichtung gehalten, wodurch sich die Rippenstruktur durch Verstrecken verändert und die gesamte Produktqualität inhomogen wird. Ein weiterer Nachteil ist die Notwendigkeit einer mindestens 50%igen Einbettung der Rippen durch einen Kalander, welcher in der Investition sehr teuer ist und den Prozeß viel aufwendiger macht. Die Vergleichsbeispiele I und II der EP 0 411 820 zeigen, daß ein zu tiefes Eindrücken die Quereigenschaften der Folie verschlechtert. Die Rippenstruktur an der Oberfläche führt auch leicht zu Beschichtungsfehlern beim Auftragen von Releasemitteln oder Primer bei der Weiterverarbeitung zu Klebebändern, da die Auftragsverfahren für Folien eine glatte Oberfläche erfordern.

Ein weiterer Nachteil von Folien mit Verstärkungsstreifen oder Rippenstrukturen in oder auf der Oberfläche sind nachteilig für die Bedruckung, die ebene Oberflächen voraussetzt. Insbesondere bei einer Nutzung der erfinungsgemäßen Folie für ein Verpackungsklebeband ist die Bedruckbarkeit für den Kunden ein wichtiges Kriterium. Die Nachteile der technischen Lösungen nach dem Stand der Technik konnten durch die nachfolgend beschriebene Erfindung überwunden werden.

Gegenstand der Erfindung sind eine in Längsrichtung gereckte Folie mit planparallelen Außenseiten und mindestens zwei coextrudierten Schichten unterschiedlicher Zusammensetzung, deren Grenzfläche nicht eben ist, sondern im Querschnitt einen nicht geraden Grenzverlauf aufweist, der sich in Längsrichtung laminar fortsetzt sowie ein Verfahren durch Coextrusion und Reckung zu seiner Herstellung und ein daraus hergestelltes Klebeband.

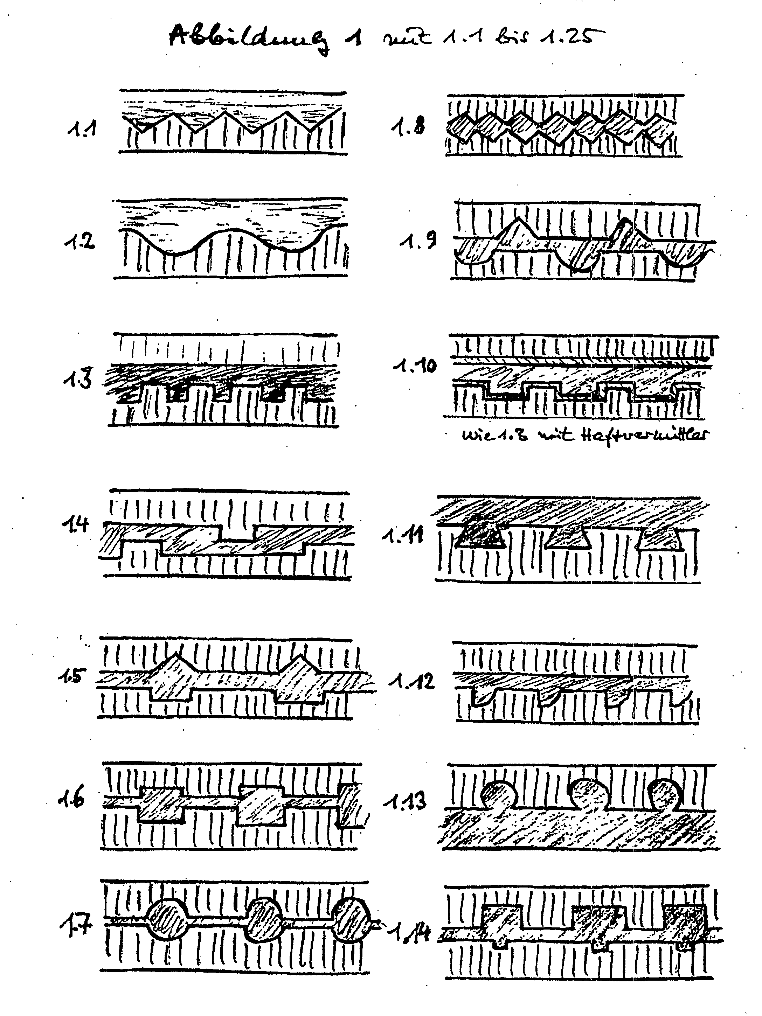

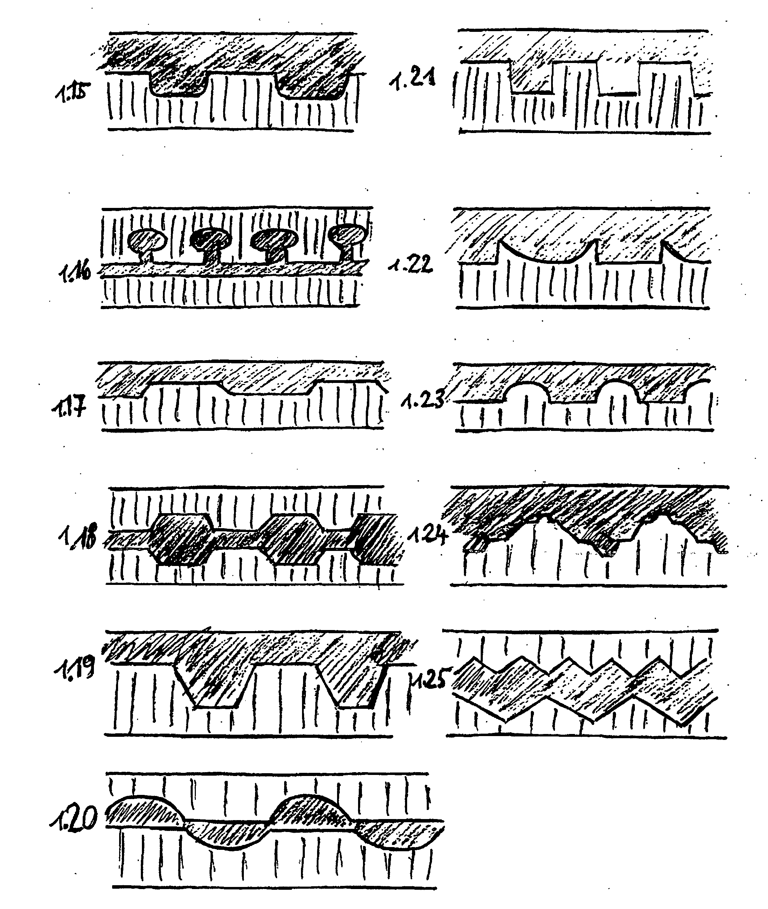

Das wesentliche technische Kennzeichen der Erfindung ist die Kombination von Seiteneinreißfestigkeit (Weiterreißkraft und Restfestigkeit) und Längsfestigkeit (Zugfestigkeit und Spannung bei 10 % Dehnung) in Längsrichtung. Dies wird durch die besondere innere Struktur und der Längsreckung der Trägerfolie erreicht, ohne daß dabei rippenartige Strukturen zur Verstärkung auf der Oberfläche oder in diese eingebettet notwendig sind. Derartige Strukturen wären wie oben ausgeführt verfahrenstechnisch problematisch. Beispiele für erfindungsgemäße Folienstrukturen zeigt die Abbildung 1 (Darstellung im Querschnitt der Folie).

Die erfindungsgemäße Folie bzw. Klebeband weist in ihrer bevorzugten Ausführungsform in Längsrichtung eine Restfestigkeit mindestens 50 N (vorzugsweise mindestens 100 N), eine Zugfestigkeit von mindestens 200 N/mm² oder eine Spannung bei 10 % Dehnung von mindestens 100 N/mm² auf, die Schlagzugzähigkeit quer liegt vorzugsweise bei mindestens 50 mJ/mm², besonders bevorzugt bei mindestens 100 mJ/mm².

Die besondere innere Struktur der Folie beruht darauf, daß die Dicke einer Schicht in Querrichtung periodisch oder unregelmäßig variiert und die zweite Schicht die Dickenschwankungen derart kompensierte, daß die Gesamtdicke im wesentlichen konstant ist. Vorteilhafterweise beträgt der Dickenunterschied innerhalb einer Schicht mehr als 10 %, insbesondere mehr als 20 %. Im Vergleich zu planparallelen Grenzflächen, wie sie in den üblichen coextrudierten Folien auftreten, ist die Grenzfläche vergrößert, so daß man von einer Verzahnung sprechen kann. Dieser Begriff Verzahnung wird bei der Betrachtung des Querschnitts der Folie in Querrichtung besonders anschaulich, wenn man die bevorzugte Ausführung, bei der im Querschnitt eine periodische Wiederholung des Musters auftritt, betrachtet. Die Zahl der Dickenmaxima bzw. -minima in Querrichtung innerhalb einer Schicht von zwei verzahnte Schichten der Trägerfolie beträgt bevorzugt mindestens 3 pro cm Breite. Die verwendete Zusammensetzung der beiden Schichten an der Grenzfläche sollten unterschiedliche mechanische Eigenschaften aufweisen. Es ist besonders vorteilhaft, wenn die Rohstoffe bzw. Rohstoffmischungen sich deutlich in der Zähigkeit unterscheiden. Bevorzugt sind solche Zusammensetzungen von Schichten, die beim Vergleich im gerecktem Zustand sich in der Schlagzugzähigkeiten quer um mindestens um den Faktor zwei unterscheiden. Eine der besonders bevorzugten Ausführungen enthält in einer der verzahnten Schichten mehr Polystyrol als Polypropylen und in der anderen verzahnten Schicht mehr Polypropylen als Polystyrol.

Die Zahl der ineinander verzahnten Grenzflächen kann eins oder mehr betragen.

Es ist günstig, neben den ineinander verzahnten Schichten mindestens eine weitere Schicht zu verwenden, um die Eigenschaften zu erweitern wie es bei üblichen coextrudierten Folien der Fall ist, so daß die Folie z. B. aus drei Schichten bestehen kann, die in diesem Fall aus zwei oder drei Rohstoffen bzw. Rohstoffmischungen bestehen würde. Grenzflächen in der Folie, welche im wesentlichen glatt sind, werden aus Schichten von Rohstoffen bzw. Rohstoffmischungen gebildet, die sowohl identisch als auch verschieden sein können. Besonders geeignet sind Folien, aus drei Schichten aufgebaut sind und bei denen die Mittelschicht eine geringere Schlagzugzähigkeit quer aufweist als die Außenschichten.

Schichten, die auf der Innenseite eine Verzahnung aufweisen und auf der anderen Seite eine Außenfläche der Folie bilden, sind auf der Außenseite im wesentlichen glatt, so wie es bei normalen coextrudierten Folien (bei denen die Grenzfläche nicht verzahnt sondern im wesentlichen glatt ist) der Fall ist. Das bedeutet, daß die erfindungsgemäßen Folien i. w. planparallele Außenseiten wie handelsübliche Folien aufweisen, d. h. die Struktur der Verzahnung wird nur im Folieninneren erzeugt und ein Einfluß auf die Außenseite soweit wie möglich vermieden. Dadurch werden die beschriebenen Probleme bei Recken und Beschichten unebener Folien verhindert, wie sie bei der Realisierung der Ausführung gemäß EP 0 411 820 und äquivalenten PS auftreten. Die technische Wirkung dieser Ausführung beruht im Umlenken eines kritischen in Querrichtung beginnenden Risses in die harmlose Längsrichtung, wobei der Abriß des Klebebandes unterbleibt. Die Wirkung wird durch die Rippen mit kerbförmiger Trennfuge erreicht. Beim Versuch die erfindungsgemäße Folie einzureißen wird ein seitlicher Einriß ebenfalls in Längsrichtung umgeleitet. Da in der erfindungsgemäßen Ausführung keine Kerbfuge vorhanden ist, muß der Effekt auf einem anderen Prinzip beruhen. Die Wirkung ist besonders deutlich ausgeprägt, wenn wie oben ausgeführt, die Zusammensetzung der verzahnten Schichten deutlich unterschiedliche Zähigkeiten aufweisen. Dies läßt den Schluß zu, daß Grund liegt, daß der Riß leichter in Längsrichtung entlang einer Linie mit der dünnsten zäheren Schicht (der dicksten spröderen Schicht) verläuft als in Querrichtung durch eine Linie mit der dicksten zäheren Schicht.

Neben der genannten besonderen inneren Struktur und der Verwendung von Material unterschiedlicher Eigenschaften beidseitig der verzahnten Grenzfläche der erfindungsgemäßen Folie ist die Verstreckung in Längsrichtung nach der Coextrusion ein wesentliches Kennzeichen. Die Verstreckung (auch Recken genannt) kann auf handelsüblichen Vorrichtungen, wie sie z. B. im ersten Arbeitsschritt der Reckung von biaxial verstreckten Folien verwendet werden, durch geführt werden. Es ist vorteilhaft für die Eigenschaften der Folie den Prozeß so zu führen; daß die Folie im wesentlichen in der Dicke und nur geringfügig abnimmt. Dabei verlängert sich die Länge der Folie um einen Faktor, der mit Reckverhältnis bezeichnet wird. Das Reckverhältnis beträgt vorzugsweise 1 : 5 bis 1 : 10, besonders bevorzugt 1 : 6,5 bis 1 : 7,5. Die Dicke der Folie liegt zwischen 40 und 150 um, vorzugsweise zwischen 50 und 90 µm.

Geeignete Rohstoffe für die erfindungsgemäße Folie sind die handelsüblichen Thermoplaste. Besonders geeignete Rohstoffe sind Polymere aus Monomeren mit einer α-olefinischer Doppelbindung, insbesondere aus Monomeren wie Butylen, Propylen, Ethylen, Vinylacetat, Acrylnitril oder Styrol. Auch Acrylsäure und seine Verbindungen gehören dazu. Die Rohstoffe können Homopolymere, Copolymere oder Terpolymere sein. Die Verteilung der Monomere in den Polymeren kann zufällig (Randompolymer) oder geordnet (Blockcopolymer, Pfropfpolymerisdat) sein. Die Taktizität kann z. B. ataktisch, isotaktisch oder syndiotaktisch sein. Polymere mit hoher Taktizität, insbesondere hoher Isotaktizität, sind zumindest für eine Schicht vorteilhaft. Von den Polykondensaten sind Polyester und Polyamide besonders geeignet. Die Morphologie der eingesetztem Rohstoffe kann teilkristallin oder amorph sein.

Vorzugsweise enthält eine Schicht der verzahnten Schichten Polypropylen. Sie ist besonders geeignet, die Polypropylen-Schicht nach dem Verstrecken zäh ist, z. B. durch Verwendung von isotaktischem Polypropylen-homo- oder -copolymer abgemischt mit Zähigkeitsverbesserern wie Elastomer, EPDM oder Polyethylen niederer Dichte oder aus zähen PP-Typen wie Blockcopolymeren mit mehr als 5 % Ethylen. Die andere verzahnte Schicht ist vorteilhafter weniger zäh, sie enthält vorzugsweise Polymer mit hoher Glasübergangstemperatur oder eine unverträgliche Polymermischung Als besonders hierfür geeignet erweist sich die Verwendung von Polystyrol, wobei nicht nur spröde Polystyrol-Homopolymere sondern auch schlagzäh modifizierte Polystyrol-Typen in Frage kommen. Geeignete Polypropylen- und Polystyrol-Polymere sind in Ullmann's Ecyclopedia of Industrial Chemistry, 5. Auflage, VCH-Verlag, Weinheim 1997 beschreiben.

Die Schmelzindices der Rohstoffe der Schichten müssen aufeinander abgestimmt werden und im richtigen Bereich liegen, vorzugsweise von 0,3 bis 15 g/10 min und besonders bevorzugt 2 bis 10 g/10 min.

Die Polymere können rein oder in Abmischung untereinander eingesetzt werden. Die Verwendung von Additiven wie Antioxidanten, UV-Absorber, Antiblock-, Gleit-, Nukleierungs- oder Lichtschutzmittel, Füllstoffen, Pigmenten oder Verträglichkeitsvermittlern ist vorteilhaft. Insbesondere Additive, die die Zähigkeit beeinflussen; können verwendet werden. Dies sind z. B. Weichmacher (wie Mineralöle oder Weichharze), ungesättigte oder (teil)hydrierte Harze (z. B. auf Basis von Natur- oder Kohlenwasserharzen), thermoplastische Elastomere (z. B. Blockcopolymere aus Styrol/substituiertes Styrol und Isopren/Butadien/EP/EB), LLDPE und Metallocen-PE. Weitere Additive sind bei Encyclopedia of Polymer Science and Technology (Interscience Publishers, New York) beschrieben.

Die Folien können mit Oberflächenbehandlungen versehen sein. Dies sind z. B. zur Haftvermittlung Corona-, Flamm- oder Plasmabehandlung oder Beschichtungen von Lösungen oder Dispersionen oder flüssige strahlenhärtbare Materialien. Weitere mögliche Beschichtungen sind Bedruckungen und Antihaftbeschichtungen, z. B. solche aus vernetzten Silikonen, Acrylaten (z. B. Primal™ 205), Polymeren mit Vinylidenchlorid oder Vinylchlorid als Monomer oder Stearylverbindungen wie Polyvinylstearylcarbamat der Chromstearatomplexen (z. B. Quilon™ C) oder Umsetzungsprodukten aus Maleinsäureanhydridopolymeren und Stearylamin. Die Folien können durch Kaschierung oder Strahlenbehandlung modifiziert sein.

Die Folie wird für die Klebebandanwendung ein- oder beidseitig mit Haftkleber als Lösung oder Dispersion oder 100 %ig (z. B. Schmelze) oder durch Coextrison mit der Folie beschichtet. Die Klebeschicht(en) kann durch Wärme oder enegiereiche Strahlen vernetzt und erforderlichenfalls mit Trennfolie oder Trennpapier abgedeckt werden. Geeignete Haftkleber sind bei D. Satas, Handbook of Pressure Sensitive Adhesive Technology (Van Nostrand Reinhold) beschrieben. Insbesondere sind Haftkleber auf Basis Acrylat, Naturkautschuk, thermoplastischem Styrolblockcopolymer oder Silicon geeignet.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbem, Lichtschutz-, Alterungsschutzmitteln, Vernetzungsmitteln, Vernetzungspromotoren oder Elastomeren abgemischt sein.

Geeignete Elastomere zum Abmischen sind z. B. EPDM- oder EPM-Kautschuk, Polyisobutylen, Butylkautschuk, Ethylen-Vinylacetat, hydrierte Blockcopolymere aus Dienen (z. B. durch Hydrierung von SBR, cSBR, BAN, NBR, SBS, SIS oder IR, solche Polymere sind z. B. als SEPS und SEBS bekannt) oder Acrylatcopolymere wie ACM.

Klebrigmacher sind beispielsweise Kohlenwasserstoffharze (z. B. aus ungesättigten C5 oder C7 Monomeren), Terpenphenolharze, Terpenharze aus Rohstoffen wie α-oder β-Pinen, aromatische Harze wie Cumaron-Inden-Harze oder Harze aus Styrol oder α-Methylstyrol, wie Kolophonium und seine Folgeprodukte wie disproportionierte, dimerisierte oder veresterte Harze, wobei Glycole, Glycerin oder Pentaerythrit eingesetzt werden können sowie weitere wie aufgeführt in Ullmanns Enzyklopädie der technischen Chemie, Band 12, S. 525- 555 (4. Aufl.), Weinheim. Besonders geeignet sind alterungsstabile Harze ohne olefinische Doppelbindung wie z. B. hydrierte Harze.

Geeignete Füllstoffe und Pigmente sind beispielsweise Ruß, Titandioxid, Calciumcarbonat, Zinkcarbonat, Zinkoxid, Silicate oder Kieselsäure.

Geeignete UV-Absorber, Lichtschutz- und Alterungsschutzmittel für die Klebemassen sind die selben, die weiter unten für die Stabilisierung der Folie aufgeführt sind.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (z. B. Nitril- oder Polyisoprenkautschuke), flüssige Polymerisate aus Buten und/oder Isobuten, Acrylsäureester, Polyvinylether, Flüssigund Weichharze auf Basis der Rohstoffe zu Klebharze, Wollwachs und andere Wachse oder flüssige Silikone. Besonders geeignet sind alterungsstabile Weichmacher ohne olefinische Doppelbindung geeignet.

Vemetzungsmittel sind beispielsweise Phenolharze oder halogenierte Phenolharze, Melamin- und Formaldehydharze. Geeignete Vernetzungspromotoren sind z. B. Maleinimide, Allylester wie Triallylcyanurat, mehrfunktionelle Ester der Acryl- und Methacryläure.

Die Beschichtungsstärke mit Klebemasse liegt vorzugsweise im Bereich von 18 bis 50, insbesondere 22 bis 29 g/m². Die Breite der Klebebandrollen liegt vorzugsweise im Bereich von 2 bis 60 mm.

Das bevorzugte Verfahren zur Herstellung der erfindungsgemäßen Folie oder Klebebandes ist, durch folgende Arbeitsschritte gekennzeichnet:
- Aufschmelzen von mindestens zwei Materialien unterschiedlicher Zusammensetzung in Extrudern
- Zusammenführen der Schmelzeströme in einer Düse, die durch Ihre Konstruktion zu einer nicht ebenen Grenzfläche gemäß Anspruch 1 führt
- Abkühlen der Schmelze zu einer Folie
- Recken der Folie in Längsrichtung

Optional kann die Folie mit Klebstoff versehen sein, wobei dies durch Coextrusion oder konventionelle Beschichtung möglich ist.

Das erfindungsgemäße Klebebandes ist für viele Anwendungen geeignet, insbesondere für Verpackungsanwendungen, z. B. zum Bündeln oder Gurten, als Transportsicherung (Paletten oder Türen von Haushaltsgeräten) oder zum Aufreißen von Verpackungen. Die Nachteile von Filamentklebebändern wie geringe Knickbruchbeständigkeit, unsauberen Schneidkanten und fehlende Durchschweißarkeit weist das erfindungsgemäße Klebeband nicht auf.

### Prüfmethoden

Dicke: DIN 53370
Höchstzugkaft/Zugfestigkeit: DIN 53455-7-5
Kraft/Spannung bei 10 % Dehnung: DIN 53455-7-5
Bruchdehung: DIN 53455-7-5
Schlagzugzähigkeit quer: DIN 53448 (Prüfkörper 15 mm breit, Einspannlänge 30 mm,
   Joch 15 g, Pendel 1 J)
Weiterreißkraft: DIN 53363
Restfestigkeit: analog DIN 53455-7-5 mit 15 mm breite Proben, welche einseitig 5 mm tief eingeschnitten wurden, der Meßwert bezieht sich auf die verbleibende Breite von 10 mm.
Schrumpf längs: 10 min bei 125 °C im Umluftofen, Prüfmuster 100 mm lang und 15 mm breit.
Schmelzindex: DIN 53735 (230 °C, 2.16 N)
Knickbruchbeständigkeit: Die Folie oder das Klebeband in 15 mm Breite wird in Längsrichtung gefaltet und die Knickkante mit einem Falzbein glatt gedrückt, danach die Faltung wieder auseinandergezogen, ein Zugversuch nach DIN 53455-7-5 durchgeführt und die prozentuale Abnahme der Zugfestigkeit durch das Falten bestimmt.
Klebtechnische Daten: AFERA 4001 entsprechend DIN EN 1939

### Beispiele

### Beispiel 1

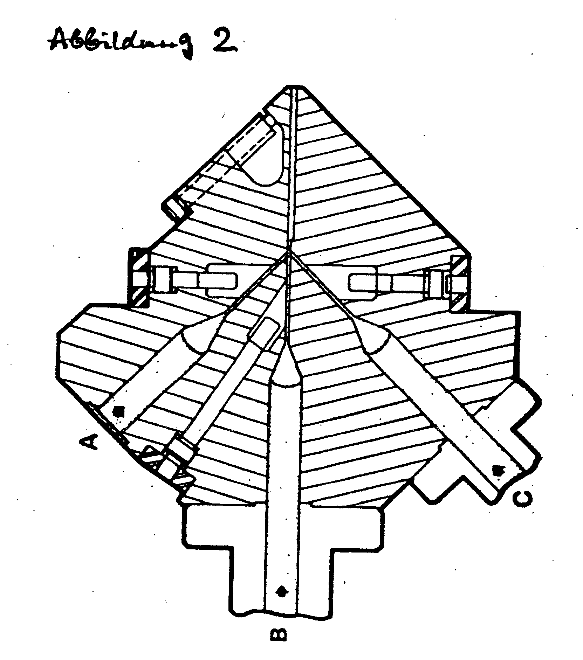

Die Folie wird auf einer Extrusionanlage in 60 cm Breite mit einer Düse gemäß Abbildung 2 ("three-layer internal-combining manifold die" mit austauschbarer Zentralplatte zur Erzeugung von Schmelzeströmen mit vorgegebenem Profil), Chill-Roll.und einer einstufigen Kurzspalt-Reckanlage hergestellt. Definition der Schichten:
Schicht 3 liegt auf der Chill-Roll auf, Schicht 1 ist die Mittelschicht, Schicht 2 liegt auf der Luftseite. Die Grenzfläche zwischen Schicht 1 und 3 ist glatt und zwischen Schicht 2 und 1 verzahnt. Verfahrensbedingungen:

| | Extruder 2 Schicht 2 | Extruder 1 Schicht 1 | Extruder 3 Schicht 3 |
|---|---|---|---|
| Temperatur Anfang | 180 °C | 180 °C | 180 °C |
| Temperatur Ende | 230 °C | 235 °C | 230 °C |
| Schneckendrehza hl | 20 rpm | 10 rpm | 20 rpm |
| Massetemperatur | 219 °C | 199 °C | 240 °C |
| Massedruck vor Sieb | 89 bar | 86 bar | 89 bar |

Rohstoffmischung Extruder 1: 50 % Shell Polystyrol N 7000 (Homopolymer), 50 % Stamylan 83 MF 10 (Copolymer)
Rohstoffmischung Extruder 2: 5 % Shell Polystyrol N 7000, 95 % Stamylan 83 MF 10
Rohstoffmischung Extruder 3: 75 % Stamylan 83 MF 10, 25 % Stamylex 1026 (LLDPE)

Backenheizung 240 °C, Kühlwalze 18 °C, Foliengeschwindigkeit vor dem Recken 1,5 m/min, nach dem Recken 13,1 m/min, Reckverhältnis 1 : 8,7. Das Profil der Zentralplatte erzeugt zwischen Schicht 2 und 1 ein sich wiederholendes Rechteckprofil, die Amplitude der Rechtecke beträgt 0,4 mm und der Phasenabstand 2 mm.

| Prüfergebnisse: | |
|---|---|
| Dicke nach dem Recken | 77 µm |
| Dickenunterschied in Schicht 2 | 10 µm entsprechend 32 % |
| durchschnittliche Dicke der Schicht 1 | 16 µm |
| durchschnittliche Dicke der Schicht 2 | 31 µm |
| durchschnittliche Dicke der Schicht 3 | 30 µm |
| Zahl der Dickenmaxima bzw. -minima in Querrichtung innerhalb einer Schicht von zwei verzahnte Schichten der Trägerfolie | 5 pro cm Breite |
| Zugfestigkeit längs | 231 N/mm² |
| Spannung bei 10 % Dehnung längs | 147 N/mm² |
| Schlagzugzähigkeit quer | 90 mJ/mm² |
| Restfestigkeit | 120 N |

Je drei Folien wurden in 80 um dadurch hergestellt, daß unter vergleichbaren Verfahrensbedingungen jeweils eine Rohstoffzusammensetzung über alle drei Extruder verarbeitet wurde und die Schlagzugzähigkeit quer der erhaltenen Folien gemessen:

| Mischung wie | Schlagzugzähigkeit quer mJ/mm² |
|---|---|
| Schicht 1 | < 10 |
| Schicht 2 | 80 |
| Schicht 3 | 250 |

Die Folie wird beidseitig coronavorbehandelt, auf der Oberseite mit einer 0,5 %igen Lösung von PVSC in Toluol beschichtet und getrocknet. Der Klebstoff wird aus 42 Gew.-% SIS-Elastomer, 20 Gew.-% Pentaerythritester des hydrierten Kolophoniums, 37 Gew.-% eines C5-Kohlenwasserstoffharzes mit einem R&B-Wert von 85 °C und 1 Gew.-% Antioxidans Irganox™ 1010 in der Schmelze gemischt und bei 150 °C mit einer Düse auf die Folienunterseite aufgetragen. Anschließend wird das Klebeband zur Mutterrolle gewickelt und zur weiteren Prüfung in 15 mm Breite geschnitten (Klingenschneider). Klebtechnische Daten: Klebkraft auf Stahl 1,6 N/cm, Abrollkraft bei 0,3 m/min 0,8 N/cm, Abrollkraft bei 30 m/min 0,5 N/cm, Masseauftrag 21 g/m².

### Beispiel 2

| Anlage wie Beispiel 1. Verfahrensbedingungen: | | | |
|---|---|---|---|
| | Extruder 2 Schicht 2 | Extruder 1 Schicht 1 | Extruder 3 Schicht 3 |
| Temperatur Anfang | 215 °C | 160 °C | 210 °C |
| Temperatur Ende | 220 °C | 240 °C | 230 °C |
| Schneckendrehza hl | 30 rpm | 25 rpm | 0,9 rpm |
| Massetemperatur | 210 °C | 248 °C | 226 °C |
| Massedruck vor Sieb | 121 bar | 125 bar | 70 bar |

Rohstoffmischung Extruder 1: 50 % Shell Polystyrol S 5400 (schlagzäh), 50 % Moplen EPQ 30 RF (Copolymer)
Rohstoffmischung Extruder 2: 10 % Shell Polystyrol S 5400, 90 % Moplen EPQ 30 RF
Rohstoffmischung Extruder 3: 100 % Moplen EPQ 30 RF

Backenheizung 240 °C, Kühlwalze 18 °C, Foliengeschwindigkeit vor dem Recken 3,6 m/min, nach dem Recken 24,7 m/min, Reckverhältnis 1 : 6,7. Das Profil der Zentralplatte erzeugt zwischen Schicht 2 und 1 ein sich wiederholendes Rechteckprofil, die Amplitude der Rechtecke beträgt 0,4 mm und der Phasenabstand 2 mm.

| Prüfergebnisse: | |
|---|---|
| Dicke nach dem Recken | 78 µm |
| Dickenunterschied in Schicht 2 | 20 µm entsprechend 48 % |
| durchschnittliche Dicke der Schicht 1 | 33 um |
| durchschnittliche Dicke der Schicht 2 | 43 um |
| durchschnittliche Dicke der Schicht 3 | 2 µm |
| Zahl der Dickenmaxima bzw. -minima in Querrichtung innerhalb einer Schicht von zwei verzahnte Schichten der Trägerfolie | 5 pro cm Breite |
| Zugfestigkeit längs | 202 N/mm² |
| Spannung bei 10 % Dehnung längs | 110 N/mm² |
| Schlagzugzähigkeit quer | 68 mJ/mm² |
| Restfestigkeit | 106 N |

Die Folie wird beidseitig coronavorbehandelt, auf der Oberseite mit einem lösungsmittelfreiem Silikon beschichtet, welches anschließend mit Elektronenstrahlen vernetzt wird. Die Unterseite wird mit einem Primer aus Naturkautschuk, Cyclokautschuk und 4,4'-Diisocyanato-diphenylmethan versehen. Der Klebstoff wird aus 40 Gew.-% Naturkautschuk SMRL (Mooney 70), 10 Gew.-% Titandioxid, 37 Gew.-% eines C5-Kohlenwasserstoffharzes mit einem R&B-Wert von 95 °C und 1 Gew.-% Antioxidans Vulkanox™ BKF in einem Kneter in Hexan gelöst. Die 20 Gew.-%ige Klebemasse wird mit einem Streichbalken die geprimerte Folienunterseite aufgetragen und bei 115 °C getrocknet. Anschließend wird das Klebeband zur Mutterrolle gewickelt und zur weiteren Prüfung in 15 mm Breite geschnitten (Klingenschneider). Klebtechnische Daten: Klebkraft auf Stahl 2,1 N/cm, Abrollkraft bei 0,3 m/min 0,2 N/cm, Abrollkraft bei 30 m/min 0,1 N/cm, Masseauftrag 23 g/m².

### Beispiel 3

| Anlage wie Beispiel 1. Verfahrensbedingungen: | | | | |
|---|---|---|---|---|
| | Extruder 2 Schicht 2 | Extruder 1 Schicht 1 | Extruder 3 Schicht 3 | |
| Temperatur Anfang | 215 °C | 160 °C | 210 °C | |
| Temperatur Ende | 220 °C | 235 °C | 230 °C | |
| Schneckendrehza hl | 30 rpm | 25 rpm | 1 rpm | |
| Massetemperatur | 205 °C | 230 °C | 228 °C | |
| Massedruck vor Sieb | 120 bar | 100 bar | 90 bar | |

Rohstoffmischung Extruder 1: 50 % Shell Polystyrol S 5400, 50 % Moplen EPQ 30 RF
Rohstoffmischung Extruder 2: 100 %, Moplen EPQ 30 RF
Rohstoffmischung Extruder 3: 100 %, Moplen EPQ 30 RF

Backenheizung 240 °C, Kühlwalze 18 °C, Foliengeschwindigkeit vor dem Recken 1,5 m/min, nach dem Recken 13,1 m/min, Reckverhältnis 1 : 8,7. Das Profil der Zentralplatte erzeugt zwischen Schicht 2 und 1 ein sich wiederholendes Profil aus Halbkreisen, der Radius der Halbkreise beträgt 0,2 mm und der Phasenabstand 2,4 mm.

| Prüfergebnisse: | |
|---|---|
| Dicke nach dem Recken | 95 µm |
| Dickenunterschied in Schicht 2 | 9 µm entsprechend 21 % |
| durchschnittliche Dicke der Schicht 1 | 50 µm |
| durchschnittliche Dicke der Schicht 2 | 42 µm |
| durchschnittliche Dicke der Schicht 3 | 3 µm |
| Zahl der Dickenmaxima bzw. -minima in Querrichtung innerhalb einer Schicht von zwei verzahnte Schichten der Trägerfolie | 3,5 pro cm Breite |
| Zugfestigkeit längs | 211 N/mm² |
| Spannung bei 10 % Dehnung längs | 103 N/mm² |
| Schlagzugzähigkeit quer | 70 mJ/mm² |
| Restfestigkeit | 102 N |

Die Folie wird auf der Unterseite coronavorbehandelt, mit einem wässrigen Acrylathaftkleber (Primal™ PS 83 D) beschichtet und bei 115 °C in einem Trockenkanal getrocknet. Anschließend wird das Klebeband zur Mutterrolle gewickelt und zur weiteren Prüfung in 15 mm Breite geschnitten (Klingenschneider). Klebkraft auf Stahl 3,2 N/cm, Abrollkraft bei 30 m/min 3,5 N/cm,

### Vergleichsbeispiel 1

Eine Folie in Strapping-Qualität wurde aus Moplen EPQ 30 RF mit einem Reckverhältnis von 1 : 8 hergestellt.

| Prüfergebnisse: | |
|---|---|
| Dicke nach dem Recken | 85 um |
| Zugfestigkeit längs | 290 N/mm² |
| Spannung bei 10 % Dehnung längs | 169 N/mm² |
| Schlagzugzähigkeit quer | 682 mJ/mm² |
| Restfestigkeit | 39 N |

## Patentansprüche

1. Trägerfolie für ein Klebeband, welche
- mindestens zwei coextrudierte Schichten unterschiedlicher Zusammensetzung aufweist, deren Grenzfläche nicht eben ist, sondern im Querschnitt einen nicht geraden Grenzverlauf aufweist, der sich in Längsrichtung laminar fortsetzt
- in Längsrichtung gereckt ist und
- planparallele Außenseiten aufweist

2. Trägerfolie gemäß Anspruch 1, welche in Längsrichtung eine Restfestigkeit mindestens 50 N aufweist

3. Trägerfolie gemäß Anspruch 1, welche in Längsrichtung eine Restfestigkeit mindestens 100 N aufweist

4. Trägerfolie gemäß Anspruch 1, welche in Längsrichtung eine Zugfestigkeit von mindestens 200 N/mm² aufweist

5. Trägerfolie gemäß Anspruch 1, welche in Längsrichtung eine Spannung bei 10 % Dehnung von mindestens 100 N/mm² aufweist

6. Trägerfolie gemäß Anspruch 1, welche eine Schlagzugzähigkeit quer von mindestens 50 mJ/mm² aufweist.

7. Trägerfolie gemäß Anspruch 1, welche eine Schlagzugzähigkeit quer von mindestens 100 mJ/mm² aufweist.

8. Trägerfolie gemäß Anspruch 1, **dadurch gekennzeichnet, daß** sich die Schlagzugzähigkeiten quer von zwei verzahnten Schichten im gerecktem Zustand mindestens um den Faktor zwei unterscheiden.

9. Trägerfolie gemäß Anspruch 1, **dadurch gekennzeichnet, daß** der Dickenunterschied innerhalb einer der Schichten von zwei verzahnten Schichten mehr als 10 % beträgt.

10. Trägerfolie gemäß Anspruch 1, **dadurch gekennzeichnet, daß** der Dickenunterschied innerhalb einer der Schichten von zwei verzahnten Schichten mehr als 20 % beträgt.

11. Trägerfolie gemäß Anspruch 1, **dadurch gekennzeichnet, daß** die Zahl der Dickenmaxima bzw. -minima in Querrichtung innerhalb einer der Schichten von zwei verzahnten Schichten mindestens 3 pro cm Breite beträgt.

12. Trägerfolie gemäß Anspruch 1, **dadurch gekennzeichnet, daß** die Zahl der ineinander verzahnten Grenzflächen größer als eins ist.

13. Trägerfolie gemäß Anspruch 1, welche zwei verzahnte Schichten und eine weitere glatte (nicht verzahnte) Schicht aufweist

14. Trägerfolie gemäß Anspruch 1, welche polymere Rohstoffe mit Schmelzindices von 0,3 bis 15 g/10 min enthält

15. Trägerfolie gemäß Anspruch 1, welche in einer der verzahnten Schichten Polystyrol und in der anderen verzahnten Schicht Polypropylen enthält.

16. Trägerfolie gemäß Anspruch 1, welche in einer der verzahnten Schichten mehr Polystyrol als Polypropylen und in der anderen verzahnten Schicht mehr Polypropylen als Polystyrol enthält.

17. Trägerfolie gemäß Anspruch 1, welche eine Dicke von 50 bis 90 µm aufweist.

18. Trägerfolie gemäß Anspruch 1, welche mit einem Reckverhältnis von 1 - 5 bis 1 -10 verstreckt ist.

19. Trägerfolie gemäß Anspruch 1, welche zwei verzahnte Schichten und eine weitere nicht verzahnte Schicht aufweist, wobei die Mittelschicht eine geringere Schlagzugzähigkeit quer aufweist als die Außenschichten.

20. Klebeband aus einer Folie nach zumindest einem der vorstehenden Ansprüche und einer ein- oder beidseitig aufgebrachten Haftkleberschicht.

21. Verfahren zur Herstellung einer Folie oder eines Klebebandes, **gekennzeichnet durch** folgende Arbeitsschritte:
- Aufschmelzen von mindestens zwei Materialien unterschiedlicher Zusammensetzung in Extrudem
- Zusammenführen der Schmelzeströme in einer Düse, die **durch** ihre Konstruktion zu einer nicht ebenen Grenzfläche gemäß Anspruch 1 führt
- Abkühlen der Schmelze zu einer Folie
- Recken der Folie in Längsrichtung.

## Claims

1. A backing film for an adhesive tape, having
- at least two coextruded layers of different composition, whose interface is not planar but instead has a nonlinear course in cross section, which continues laminarly in the machine direction,
- been oriented in the machine direction, and
- plane-parallel outer faces.

2. The backing film according to Claim 1, which in the machine direction has a residual strength of at least 50 N.

3. The backing film according to Claim 1, which in the machine direction has a residual strength of at least 100 N.

4. The backing film according to Claim 1, which in the machine direction has a tensile strength of at least 200 N/mm².

5. The backing film according to Claim 1, which in the machine direction has a stress at 10% elongation of at least 100 N/mm².

6. The backing film according to Claim 1, which has a cross-direction tensile impact strength of at least 50 mJ/mm².

7. The backing film according to Claim 1, which has a cross-direction tensile impact strength of at least 100 mJ/mm².

8. The backing film according to Claim 1, wherein the cross-direction tensile impact strengths of two intermeshed layers in the oriented state differ by a factor of at least two.

9. The backing film according to Claim 1, wherein the difference in thickness within one of the layers of two intermeshed layers is more than 10%.

10. The backing film according to Claim 1, wherein the difference in thickness within one of the layers of two intermeshed layers is more than 20%.

11. The backing film according to Claim 1, wherein the number of thickness maxima and, respectively, minima in the cross direction within one of the layers of two intermeshed layers is at least 3 per cm width.

12. The backing film according to Claim 1, wherein the number of intermeshed interfaces is greater than one.

13. The backing film according to Claim 1, which has two intermeshed layers and one further smooth (non-intermeshed) layer.

14. The backing film according to Claim 1, which comprises polymeric raw materials having melt indices of 0.3 to 15 g/10 min.

15. The backing film according to Claim 1, which comprises polystyrene in one of the intermeshed layers and polypropylene in the other intermeshed layer.

16. The backing film according to Claim 1, which comprises more polystyrene than polypropylene in one of the intermeshed layers and more polypropylene than polystyrene in the other intermeshed layer.

17. The backing film according to Claim 1, which has a thickness of from 50 to 90 µm.

18. The backing film according to Claim 1, which has been oriented with a draw ratio of from 1 - 5 to 1 -.10.

19. The backing film according to Claim 1, which has two intermeshed layers and one further non-intermeshed layer, the middle layer having a lower cross-direction tensile impact strength than the outer layers.

20. An adhesive tape comprising a film according to at least one of the preceding claims and a layer of pressure-senitive adhesive applied to one or both sides.

21. A process for producing a film or adhesive tape, comprising the following operations:
- melting at least two materials of different composition in extruders
- combining the melt streams in a die which by virtue of its construction leads to a non-planar interface as set forth in Claim 1
- cooling the melt to a film
- orienting the film in the machine direction.

## Revendications

1. Film porteur pour ruban adhésif qui
- présente au moins deux couches coextrudées de composition différente, dont la surface de contact n'est pas plane, mais présente en section transversale un contour non rectiligne, qui se poursuit de manière laminaire dans le sens longitudinal,
- est étiré dans le sens longitudinal et
- présente des côtés extérieurs parallèles en plan.

2. Film porteur selon la revendication 1, qui présente dans le sens longitudinal une résistance résiduelle d'au moins 50 N.

3. Film porteur selon la revendication 1, qui présente dans le sens longitudinal une résistance résiduelle d'au moins 100 N.

4. Film porteur selon la revendication 1, qui présente dans le sens longitudinal une résistance à la traction d'au moins 200 N/mm².

5. Film porteur selon la revendication 1, qui présente dans le sens longitudinal une tension à 10 % d'extension d'au moins 100 N/mm².

6. Film porteur selon la revendication 1, qui présente transversalement une résilience d'au moins 50 mJ/mm².

7. Film porteur selon la revendication 1, qui présente transversalement une résilience d'au moins 100 mJ/mm².

8. Film porteur selon la revendication 1, **caractérisé en ce que** les résiliences transversales de deux couches dentées se distinguent à l'état étiré d'au moins le facteur deux.

9. Film porteur selon la revendication 1, **caractérisé en ce que** la différence d'épaisseur à l'intérieur d'une des couches sur deux couches dentées est de plus de 10 %.

10. Film porteur selon la revendication 1, **caractérisé en ce que** la différence d'épaisseur à l'intérieur d'une des couches sur deux couches dentées est de plus de 20 %.

11. Film porteur selon la revendication 1, **caractérisé en ce que** le nombre de maxima ou minima d'épaisseur dans le sens transversal à l'intérieur d'une des couches sur deux couches dentées est d'au moins 3 par cm de largeur.

12. Film porteur selon la revendication 1, **caractérisé en ce que** le nombre de surfaces de contact indentées les unes dans les autres est supérieur à un.

13. Film porteur selon la revendication 1, qui présente deux couches dentées et une autre couche lisse (non dentée).

14. Film porteur selon la revendication 1, qui contient des matières premières en polymères à indices de fusion de 0,3 à 15 g/10 min.

15. Film porteur selon la revendication 1, qui contient dans une des couches dentées du polystyrène et dans l'autre couche dentée du polypropylène.

16. Film porteur selon la revendication 1, qui contient dans une des couches dentées plus de polystyrène que de polypropylène et dans l'autre couche dentée plus de polypropylène que de polystyrène.

17. Film porteur selon la revendication 1, qui présente une épaisseur de 50 à 90 µm.

18. Film porteur selon la revendication 1, qui est étiré avec un rapport d'étirement allant de 1 à 5 à 1 à 10.

19. Film porteur selon la revendication 1, qui présente deux couches dentées et une autre couche non dentée, la couche centrale présentant transversalement une résilience plus faible que les couches externes.

20. Ruban adhésif composé d'un film suivant au moins l'une quelconque des revendications précédentes et d'une couche de colle de contact appliquée sur une ou deux faces.

21. Procédé de fabrication d'un film ou d'un ruban adhésif, **caractérisé par** les étapes opératoires suivantes :
- fusion d'au moins deux matières de composition différente dans des extrudeuses,
- guidage commun des flux de coulée dans une buse, qui mène par sa construction à une surface de contact non plane selon la revendication 1,
- refroidissement de la coulée pour former un film,
- étirement du film dans le sens longitudinal.
